# EUROPEAN PATENT APPLICATION

(11) **EP 4 614 337 A1**
(43) Date of publication of application: **10.09.2025**
(21) Application number: 25152569.7
(22) Date of filing: 17.01.2025
(51) Int. Cl.: G06F 16/11, G06F 16/16, H04N 1/00

(54) **INFORMATION PROCESSING SYSTEM, INFORMATION PROCESSING METHOD, AND PROGRAM**

(30) Priority: 04.03.2024 JP 2024031857
(71) Applicant: FUJIFILM Business Innovation Corp., Minato-ku Tokyo (JP)
(72) Inventor: INOMATA, Kohshiro, Yokohama-shi (JP)
(74) Representative: Haseltine Lake Kempner LLP

(57) **Abstract**

An information processing system is configured to, in response to a filename being assigned to a predetermined tag on a web page, automatically start uploading a file having the filename, the information processing system including a processor configured to: receive an instruction to generate a file after the predetermined tag is selected; and assign a filename of the file to the predetermined tag in response to detecting completion of file generation executed in accordance with the received instruction.

## Description

### Background

### (i) Technical Field

The present disclosure relates to an information processing system, an information processing method, and a program.

### (ii) Related Art

Using a web browser to upload a file to a web server is common practice. The HyperText Markup Language (HTML) specification discloses methods for uploading a file using a form tag. In these methods, a user selects a file selection tag to select an existing file and then selects a transmission tag to cause a browser to upload the selected file.

A file is uploaded to a web server using a browser installed in a multifunction peripheral. For example, Japanese Unexamined Patent Application Publications No. 2019-024187, No. 2012-205056, and No. 2005-149320 disclose techniques for changing the interpretation of a file selection tag when a web page is displayed by a browser installed in a multifunction peripheral, performing a scan to generate a new file instead of prompting the user to select an existing file, and then uploading the newly generated file using a transmission tag.

### Summary

Examples of a programming language that runs on a web browser include JavaScript (registered trademark). JavaScript enables a component to move on a web page and also controls the operation of a button and/or other components. Thus, recent web sites increasingly contain a web page created by combining HTML and JavaScript.

Programming languages that run on web browsers (hereinafter referred to as "scripting languages"), such as JavaScript described above, have developed, and thus a file can be uploaded using a scripting language in response to the file being selected in HTML without using an HTML form tag. These technologies are able to reduce a two-step user operation consisting of file selection and transmission selection, which has been previously required, to a single step of file selection, thereby improving user operability.

When a file is uploaded in a single step as described above, a new file is generated in response to a user selecting a file selection tag, as in the web browser of the multifunction peripheral mentioned above, and the user needs to pay attention to when to assign a filename in HTML. Unlike assigning a filename to a file that already exists, a new file is generated after the file selection tag is selected, and thus a non-existent or incomplete file may be uploaded if a filename is assigned in HTML before the file generation is completed.

Accordingly, it is an object of the present disclosure to provide a system and a method for uploading a newly generated file when the file is newly generated and is assigned a filename in response to a predetermined tag being selected on a web page.

According to a first aspect of the present disclosure, there is provided an information processing system configured to, in response to a filename being assigned to a predetermined tag on a web page, automatically start uploading a file having the filename, and the information processing system comprising a processor configured to: receive an instruction to generate a file after the predetermined tag is selected; and assign a filename of the file to the predetermined tag in response to detecting completion of file generation executed in accordance with the received instruction.

According to a second aspect of the present disclosure, in the information processing system according to the first aspect, the processor is configured to provide an instruction to execute the file generation without assigning to the predetermined tag the filename of the file to be generated by the file generation and is configured to monitor the file generation.

According to a third aspect of the present disclosure, in the information processing system according to the first or second aspect, the processor is configured to start uploading the file by assigning the filename of the file to the predetermined tag.

According to a fourth aspect of the present disclosure, in the information processing system according to the first aspect, the processor is configured to, in response to detecting the completion of the file generation, make an inquiry about a filename of the file generated by the file generation; and assign the filename acquired as a result of the inquiry to the predetermined tag.

According to a fifth aspect of the present disclosure, in the information processing system according to any one of the first to third aspects, the processor is configured to, when the filename to be assigned to the predetermined tag is acquired at a time of receiving the instruction, provide an instruction to execute the file generation without assigning the filename to the predetermined tag.

According to a sixth aspect of the present disclosure, in the information processing system according to any one of the first to fifth aspects, the processor is configured to keep a web browser operating while executing the uploading.

According to a seventh aspect of the present disclosure, in the information processing system according to the sixth aspect, the processor is configured to cause a user interface to indicate that the uploading is in progress and is configured to cause the user interface to accept no user operation during the uploading.

According to an eighth aspect of the present disclosure, in the information processing system according to the sixth aspect, the processor is configured to, in response to a user operation on a user interface, allocate a dedicated window to the web browser and keep the web browser executing the uploading and is configured to keep the user interface available for a user operation during the uploading.

According to a ninth aspect of the present disclosure, in the information processing system according to any one of the first to eighth aspects, the processor according to any one of the first aspect to the eighth aspect is configured to allocate a dedicated window to a web browser and cause the web browser to start the uploading and is configured to keep a user interface available for a user operation during the uploading.

According to a tenth aspect of the present disclosure, there is provided an information processing system configured to, in response to a filename being assigned to a predetermined tag on a web page, automatically start uploading a file having the filename, and the information processing system includes: a processor configured to: receive an instruction to generate a file after the predetermined tag is selected; and when a filename to be assigned to the predetermined tag is acquired at a time of receiving the instruction, provide an instruction to execute file generation without assigning the filename to the predetermined tag.

According to an eleventh aspect of the present disclosure, in the information processing system according to any one of the first to tenth aspects, the file generation includes scanning.

According to a twelfth aspect of the present disclosure, there is provided a program causing a computer to execute a process, the computer being configured to, in response to a filename being assigned to a predetermined tag on a web page, automatically start uploading a file having the filename, and the process includes: receiving an instruction to generate a file after the predetermined tag is selected; and assigning a filename of the file to the predetermined tag in response to detecting completion of file generation executed in accordance with the received instruction.

According to a thirteenth aspect of the present disclosure, there is provided a program causing a computer to execute a process, the computer being configured to, in response to a filename being assigned to a predetermined tag on a web page, automatically start uploading a file having the filename, and the process includes: receiving an instruction to generate a file after the predetermined tag is selected; and when a filename to be assigned to the predetermined tag is acquired at a time of receiving the instruction, providing an instruction to execute file generation without assigning the filename to the predetermined tag.

According to a fourteenth aspect of the present disclosure, there is provided an information processing method in which, in response to a filename being assigned to a predetermined tag on a web page, a file having the filename automatically starts to be uploaded, and the method includes: receiving an instruction to generate a file after the predetermined tag is selected; and assigning a filename of the file to the predetermined tag in response to detecting completion of file generation executed in accordance with the received instruction.

According to a fifteenth aspect of the present disclosure, there is provided an information processing method in which, in response to a filename being assigned to a predetermined tag on a web page, a file having the filename automatically starts to be uploaded, and the method includes: receiving an instruction to generate a file after the predetermined tag is selected; and when a filename to be assigned to the predetermined tag is acquired at a time of receiving the instruction, providing an instruction to execute file generation without assigning the filename to the predetermined tag.

According to the first aspect of the present disclosure, the newly generated file may be uploaded when the file is newly generated and is assigned the filename in response to the predetermined tag being selected on the web page.

According to the second aspect of the present disclosure, the completion of the file generation may be detected.

According to the third aspect of the present disclosure, the file may automatically start to be uploaded in response to the completion of the file generation.

According to the fourth aspect of the present disclosure, the process may be controlled in such a manner that the filename to be assigned to the predetermined tag is acquired only after the file generation is completed.

According to the fifth aspect of the present disclosure, the process may be controlled in such a manner that the filename is assigned to the predetermined tag only after the file generation is completed.

According to the sixth aspect of the present disclosure, the uploading in progress may be terminated normally.

According to the seventh aspect of the present disclosure, it is possible to prevent the uploading in progress from being terminated by a user operation.

According to the eighth aspect of the present disclosure, it is possible to respond to a user operation while keeping the uploading in progress.

According to the ninth aspect of the present disclosure, the uploading may be executed without occupying the user interface.

According to the tenth aspect of the present disclosure, the process may be controlled in such a manner that the filename is assigned to the predetermined tag only after the file generation is completed.

According to the eleventh aspect of the present disclosure, the file newly generated by scanning may be uploaded.

According to the twelfth aspect and the fourteenth aspect of the present disclosure, the newly generated file may be uploaded when the file is newly generated and is assigned the filename in response to the predetermined tag being selected on the web page.

According to the thirteenth aspect and the fifteenth aspect of the present disclosure, the process may be controlled in such a manner that the filename is assigned to the predetermined tag only after the file generation is completed.

### Brief Description of the Drawings

An exemplary embodiment of the present disclosure will be described in detail based on the following figures, wherein:
Fig. 1 is a diagram illustrating an overall configuration of a web service system and a block configuration of a multifunction peripheral according to the present exemplary embodiment;
Fig. 2A is a sequence chart illustrating a series of procedures for generating and uploading scan data according to the present exemplary embodiment;
Fig. 2B is a sequence chart continuing from Fig. 2A;
Fig. 3A is a diagram illustrating an example of a home screen displayed by an operation panel according to the present exemplary embodiment;
Fig. 3B is a diagram illustrating an example of a menu screen for a cloud service displayed by the operation panel according to the present exemplary embodiment;
Fig. 3C is a diagram illustrating an example of a submenu screen displayed by the operation panel according to the present exemplary embodiment;
Fig. 3D is a diagram illustrating an example of a scan-parameter setting screen displayed by the operation panel according to the present exemplary embodiment;
Fig. 3E is a diagram illustrating an example of a process-in-progress screen displayed by the operation panel according to the present exemplary embodiment;
Fig. 3F is a diagram illustrating an example of a file-generation completion screen displayed by the operation panel according to the present exemplary embodiment; and
Fig. 3G is a diagram illustrating an example of a menu screen displayed by the operation panel after uploading according to the present exemplary embodiment.

### Detailed Description

Hereinafter, an exemplary embodiment of the present disclosure will be described with reference to the drawings.

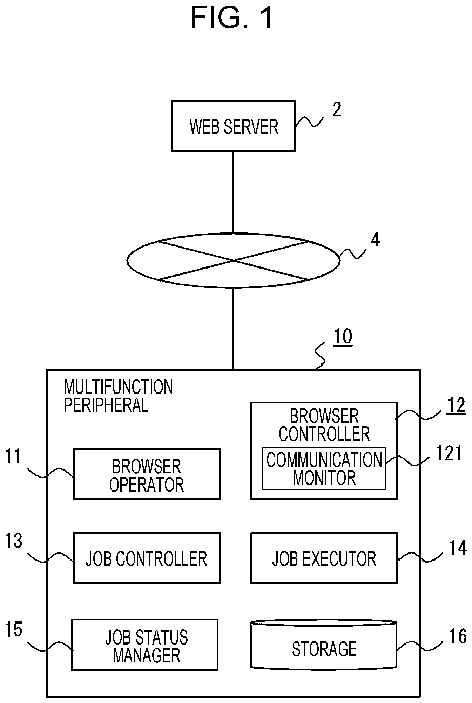

Fig. 1 is a diagram illustrating an overall configuration of a web service system and a block configuration of a multifunction peripheral 10 according to the present exemplary embodiment. Fig. 1 illustrates a configuration in which a web server 2 and the multifunction peripheral 10 are connected with a network 4 such as the Internet interposed therebetween. The web server 2 is a server computer configured to provide web services to the multifunction peripheral 10 configured to operate as a client. The multifunction peripheral 10 is an example of an information processing system configured to use a web service provided by the web server 2. Although the system may include one or more web servers 2 and one or more multifunction peripherals 10, one of each is illustrated in Fig. 1 since each unit has a corresponding processing function described below.

The multifunction peripheral 10 is a type of image forming apparatus having various functions such as a print function, a copy function, and a scanner function and including a built-in computer. The multifunction peripheral 10 according to the present exemplary embodiment may be built using the same constituent elements as apparatuses in the art. Specifically, the multifunction peripheral 10 includes at least various components to implement the functions installed in the multifunction peripheral 10 and a network interface; examples of the various components include a read-only memory (ROM), a random-access memory (RAM), a hard disk drive (HDD) as a storage unit, an operation panel as a user interface, a scanner, and a printer; the network interface is configured to connect to the network 4 to send and receive data to and from the web server 2.

As illustrated in Fig. 1, the multifunction peripheral 10 includes a browser operator 11, a browser controller 12, a job controller 13, a job executor 14, a job status manager 15, and a storage 16. Any component that is not referred to in the description of the present exemplary embodiment is omitted in Fig. 1.

The browser operator 11 is configured to operate a web browser (hereinafter, also simply referred to as a "browser") installed in the multifunction peripheral 10, thereby executing various processes based on the browser functions, as described below. The browser controller 12 is configured to control browser operation by the browser operator 11. A communication monitor 121 in the browser controller 12 is configured to monitor communication processing by the web browser. More specifically, the communication monitor 121 is configured to monitor data communication between the browser operator 11 and the web server 2 to detect the completion of uploading scan data.

The job executor 14 is configured to execute various jobs in response to requests from a user who operates the operation panel. For example, when scanning is requested, the job executor 14 reads an original document placed on the platen of the multifunction peripheral 10 and generates read image data of the original document (hereinafter, also referred to as "scan data"). The job controller 13 is configured to control job execution by the job executor 14. The job status manager 15 is configured to manage the status of the job execution by the job executor 14. For example, the job status manager 15 monitors the status of the job execution from the start to the end and records execution details in a log when the job execution is completed. The storage 16 stores scan data and log files.

Each of the components 11 to 15 in the multifunction peripheral 10 is implemented by cooperation between the computer installed in the multifunction peripheral 10 and programs running on the CPU installed onto the computer. The storage 16 is implemented by an HDD installed in the multifunction peripheral 10. Alternatively, the RAM may be used, or a storage unit located outside may be used via a network.

The programs to be used in the present exemplary embodiment may be provided not only via a communication unit but also in a stored form using a computer-readable recording medium, such as a universal-serial-bus (USB) memory. The programs provided using the communication unit or the recording medium are installed onto the computer, and the CPU of the computer executes the programs consecutively to perform various processes.

The multifunction peripheral 10 as the information processing system is illustrated as a single apparatus but may be implemented as a combination of multiple computers and apparatuses.

A web page described in the present exemplary embodiment is created by combining HTML and JavaScript, which is an example of a language other than HTML. A web page described in the present exemplary embodiment contains at least a file selection tag as a predetermined tag in HTML. The file selection tag is described in the form of an input tag type="file". The interpretation of the file selection tag is changed, and scanning is performed instead of file selection in the present exemplary embodiment. JavaScript automatically starts uploading in response to detecting that a filename is assigned to the file selection tag.

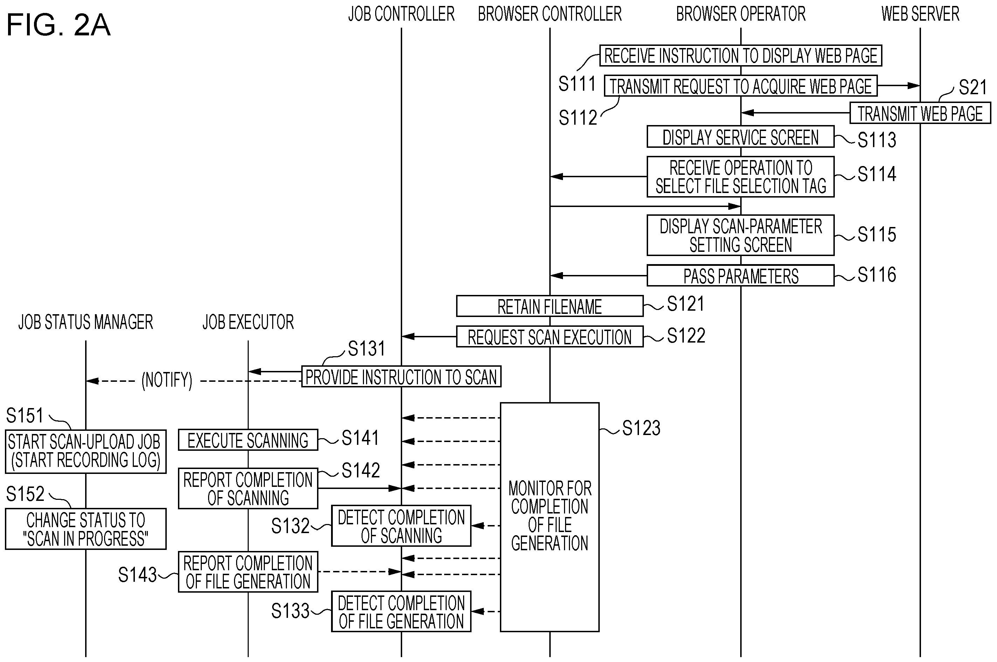

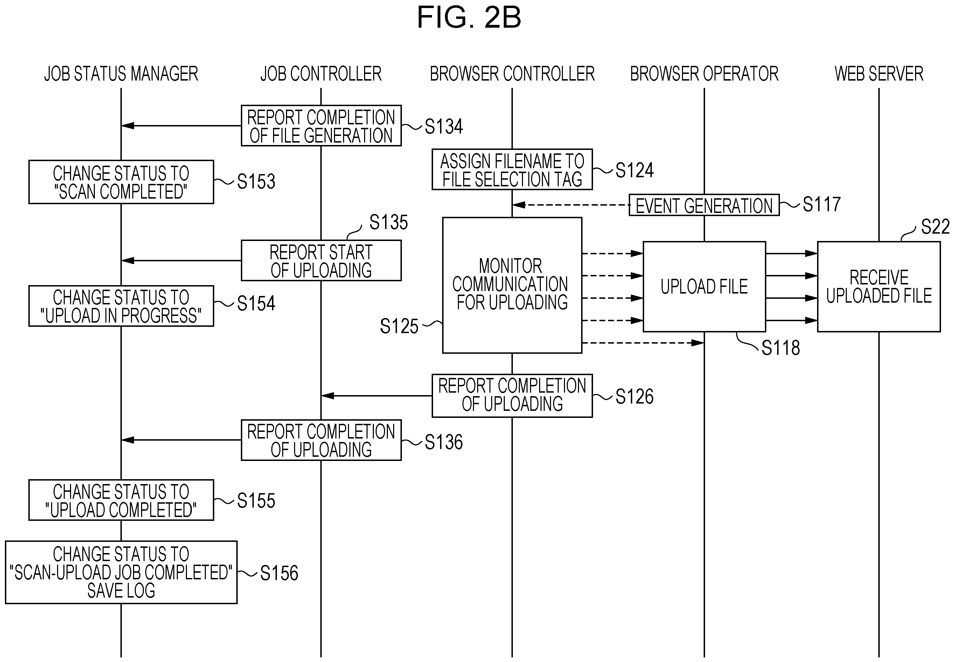

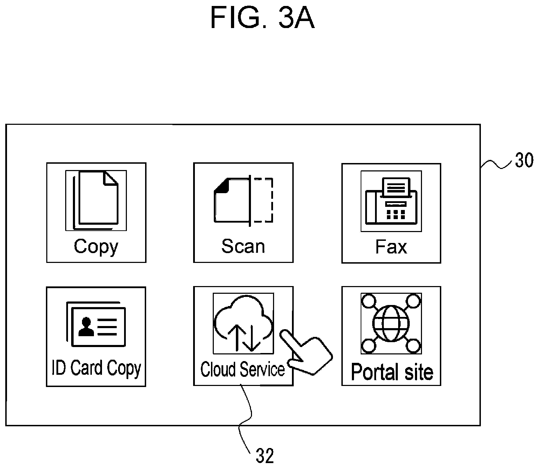

Next, operation in the present exemplary embodiment will be described. In the present exemplary embodiment, description will be given as an example with regard to a case where a user is to scan an original document using the multifunction peripheral 10 and upload a file of the scan data to the web server 2. In the present exemplary embodiment, the multifunction peripheral 10 performs scanning and uploading instead of file selection in response to the user selecting the file selection tag on a web page that is displayed when the user selects uploading a file. A series of procedures from displaying the web page to uploading a file will be described with reference to the sequence chart illustrated in Figs. 2A and 2B and the screen transitions illustrated in Figs. 3A to 3G.

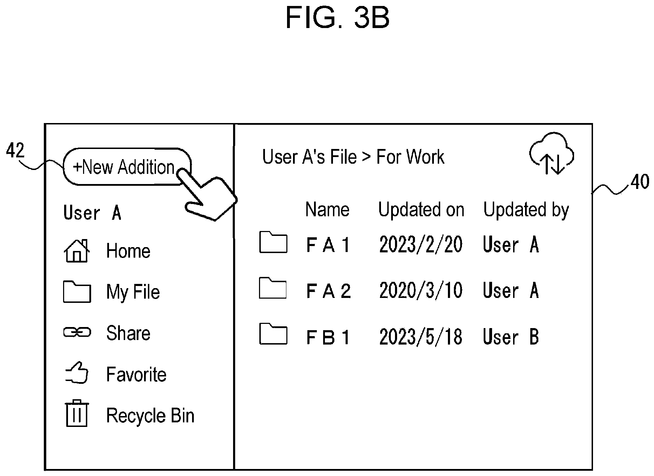

First, to upload a file of scan data, the user selects a cloud service button 32 on a home screen 30 illustrated in Fig. 3A, which is displayed by the operation panel in the multifunction peripheral 10. Fig. 3B illustrates an example of a menu screen 40 for a cloud service displayed by the operation panel in response to the cloud service button 32 being selected. In the present exemplary embodiment, the identifying information of the user who logs in to and uses the multifunction peripheral 10 is assumed to be "User A".

Upon receiving an instruction to display a web page from the user, who selects the cloud service button 32 on the home screen 30 (step S111), the browser operator 11 in the multifunction peripheral 10 transmits a request to acquire the web page to the web server 2 (step S112).

In response to the request from the multifunction peripheral 10, the web server 2 transmits to the multifunction peripheral 10 the web page for displaying the service screen 40 (step S21).

The browser operator 11 in the multifunction peripheral 10 acquires the web page corresponding to the cloud service from the web server 2 as described above and causes the operation panel to display the menu screen (hereinafter also referred to as the "service screen") 40 of the cloud service illustrated in Fig. 3B (step S 113).

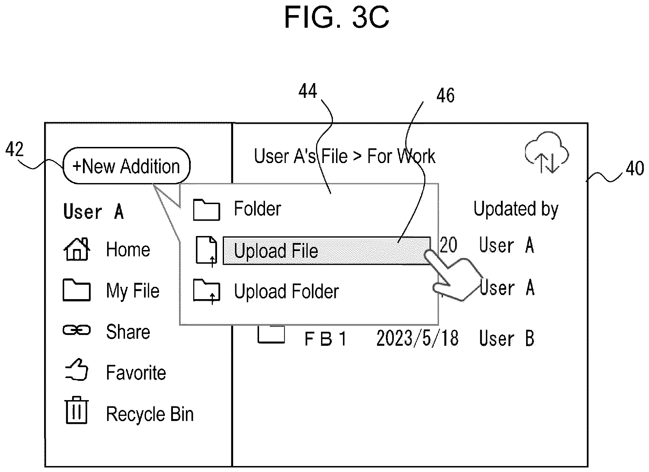

Subsequently, the user selects a "+New Addition" button 42 on the service screen 40, and a submenu screen 44 is displayed in response as illustrated, for example, in Fig. 3C. The submenu screen 44 is superimposed onto the service screen 40 as illustrated in Fig. 3C and displays a list of new-addition functions provided by the cloud service. The user selects an "Upload File" button 46 as intended on the submenu screen 44. This button 46 corresponds to an <input type=file> tag (hereinafter also referred to as a "file selection tag") included in the web page described above, and selecting this button 46 corresponds to selecting the file selection tag. The browser operator 11 receives the selection operation in this way in response to the user selecting the file selection tag (step S114).

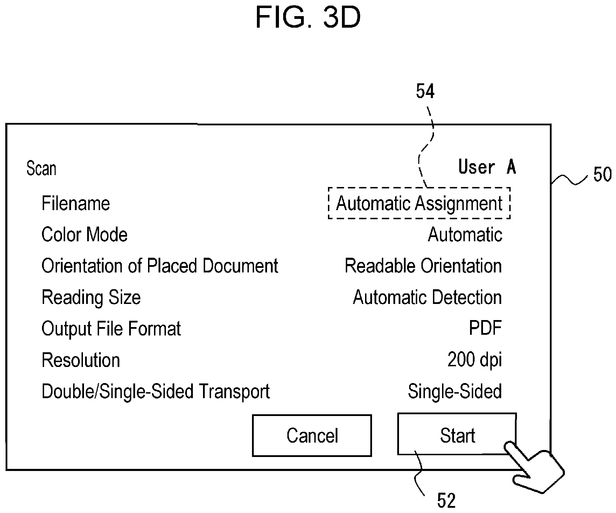

Although the browser controller 12 normally displays a file selection screen in response to the selection of the file selection tag, the browser controller 12 in the present exemplary embodiment receives the user operation as an instruction for scanning and causes the browser operator 11 to display a scan-parameter setting screen in response to the user operation. The browser operator 11 displays the scan-parameter setting screen in accordance with an instruction from the browser controller 12 (step S115). Fig. 3D illustrates an example of a scan-parameter setting screen 50 thus displayed by the operation panel.

After setting parameters as intended on the scan-parameter setting screen 50, the user selects a start button 52. Although the user may assign a filename to a file to be generated by the scanning, Fig. 3D illustrates an example of a case of using a function of the multifunction peripheral 10 to automatically assign a filename as indicated by a dashed line 54.

Fig. 3D illustrates an example in which the user sets parameters as intended by way of non-limiting example. For example, the scanning process may automatically start with default parameters without displaying the screen in Fig. 3D. Alternatively, predetermined parameters may be acquired from an external server, and the scanning process may start with the predetermined parameters.

The browser operator 11 passes selected parameters to the browser controller 12 in response to the user selecting the start button 52 (step S116). However, when "Automatic Assignment" is selected for the filename as in this example, the browser operator 11 generates a filename according to a predetermined rule and includes the filename in the parameters to be passed to the browser controller 12.

It should be noted that the predetermined rule for generating a filename is not a feature of the present exemplary embodiment. In the present exemplary embodiment, a file is assigned a filename including, for example, the date and time when the file is named or when the file generation is completed.

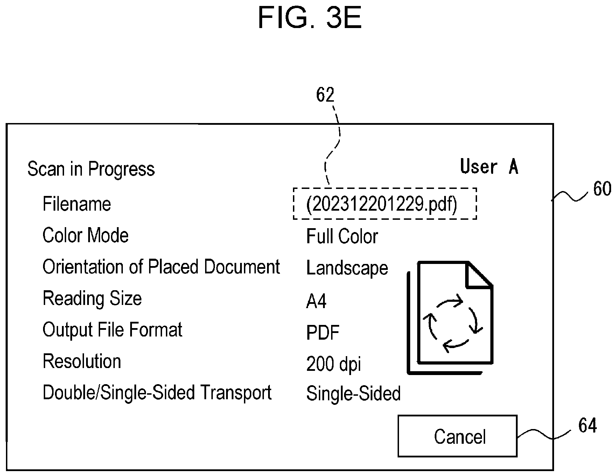

In this manner, the user operation required to execute an upload function for the file is completed, and thereafter, the browser operator 11 may cause the operation panel to display a process-in-progress screen 60 as illustrated in Fig. 3E to notify the user that the instruction for scanning from the user has been received normally and the scanning process has started. The process-in-progress screen 60 displays the automatically assigned filename as indicated by a dashed line 62. For example, the filename may be given in parentheses in this case, as illustrated in Fig. 3E, to indicate that the filename is automatically assigned and is not provided in a different manner. When the file of the scan data is not yet created, the filename may be displayed differently from other parameters, for example, in gray letters to indicate that the file is not yet created. The browser operator 11 may cause the operation panel to continue to display the process-in-progress screen 60 until the file uploading is completed or until the user selects a cancel button 64.

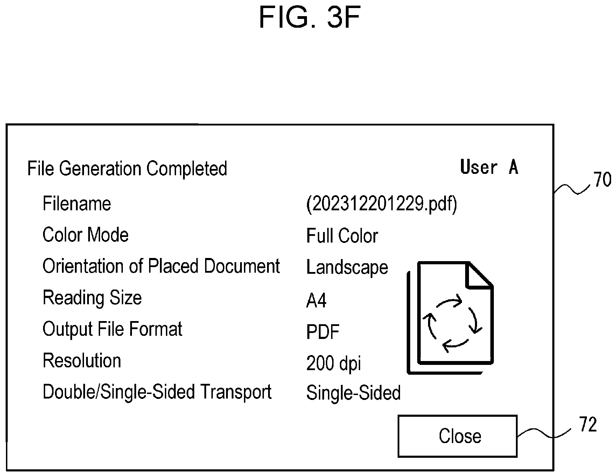

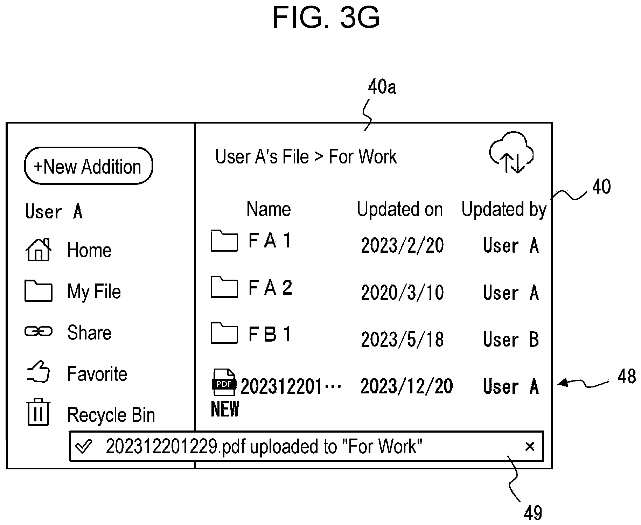

Once the file generation is completed, the screen may transition to a file-generation completion screen 70 as illustrated in Fig. 3F. Being aware that the file generation is completed since the file-generation completion screen 70 is displayed, the user may select a close button 72 to cause the service screen 40 to be displayed. Fig. 3G illustrates an example of the service screen 40 that is displayed after the process is completed.

Upon receiving the scan parameters sent from the browser operator 11 together with the notification of the instruction to start scanning, the browser controller 12 retains the filename of the scan data included in the scan parameters (step S121). In other words, the browser controller 12 retains the filename internally without assigning the filename to the file selection tag at this stage although the filename of the scan data has been determined before scan execution since the scan parameters sent from the browser operator 11 includes the filename of the scan data. The browser controller 12 then sends the scan parameters to the job controller 13 to request scan execution (step S122). The filename may be retained after the scan execution is requested.

Thereafter, the browser controller 12 monitors the operation of the job controller 13. More specifically, the browser controller 12 monitors the execution of the scanning process to determine whether the file generation for the scan data has been completed in the scanning process (step S123).

In response to the request for scan execution from the browser controller 12, the job controller 13 instructs the job executor 14 to execute the scanning (step S 131).

In the present exemplary embodiment, the execution of a job is recorded in a log. Accordingly, the job controller 13 instructs the job executor 14 to execute the scanning and also notifies the job status manager 15 that a scanning job is to be executed. Consequently, the job executor 14 executes the scanning process according to the scan parameters sent along with the instruction for execution (step S141). Since the scanning process executed in response to the instruction generates a file of the scan data, the scanning process corresponds to the file generation. Meanwhile, upon receiving the notification from the job controller 13, the job status manager 15 starts recording a log in response to the start of a job for scanning and uploading a file generated by the scanning (hereinafter referred to as a "scan-upload job") (step S151). In the initial setting of the log, the job status manager 15 sets the status of the scan-upload job to "scan started". Then, the job status manager 15 changes the status of the scan-upload job from "scan started" to "scan in progress" (step S152).

In response to the completion of the scanning that has been started as described above, the job executor 14 notifies the job controller 13 of the completion of the scanning (step S142). Upon receiving the notification from the job executor 14, the job controller 13 detects that the scanning has been completed (step S132). The browser controller 12, which monitors the operation of the job controller 13, also detects that the scanning has been completed.

Subsequently, the job executor 14 generates a file for storing the read image data generated by the scanning, and in response to the completion of the generation of this file, the job executor 14 notifies the job controller 13 of the completion of the file generation (step S143).

In the present exemplary embodiment, the filename of the file to be generated by the scanning process has been set in advance on the scan-parameter setting screen 50 illustrated in Fig. 3D. If the filename has not been set, the job controller 13 may make an inquiry to the user about the filename upon detecting the completion of the scanning process by the job executor 14 and may acquire the filename as a result of this inquiry. The filename thus acquired is assigned to the file selection tag in a process described below.

Upon receiving the notification from the job executor 14, the job controller 13 detects the completion of the file generation (step S133). Upon detecting the completion of the file generation, the job controller 13 notifies the job status manager 15 of the completion of the file generation (step S134). In response to the notification of the completion of the file generation, the job status manager 15 changes the status of the scan-upload job from "scan in progress" to "scan completed" (step S153). Then, the job controller 13 notifies the job status manager 15 of the start of the uploading to be subsequently executed (step S135). The job status manager 15 changes the status of the scan-upload job from "scan completed" to "upload in progress" (step S154).

Meanwhile, the browser controller 12 monitors the operation of the job controller 13 to detect the completion of the file generation. In the present exemplary embodiment, the browser controller 12 monitors the operation of the job controller 13 in step S123, thereby detecting the completion of generation of the file of the scan data. However, for example, the job controller 13 may notify the browser controller 12 as well as the job status manager 15 in step S134.

In response to detecting the completion of the file generation, the browser controller 12 assigns the filename of the retained scan data to the file selection tag (step S124). In the present exemplary embodiment, regardless of the time that the filename of the scan data is determined, the filename of the scan data is assigned to the file selection tag after the file generation is completed.

Subsequently, after the filename is assigned, the communication monitor 121 in the browser controller 12 monitors communication for uploading (step S125). Strictly speaking, although a file path may be assigned to the file selection tag, description will be given on the assumption that a "filename" is assigned for the sake of convenience in the present exemplary embodiment.

Meanwhile, in response to the filename being assigned to the file selection tag, a JavaScript code that is written as part of the web page and that is configured to implement an upload function detects that the filename has been assigned to the file selection tag (corresponding to the event generation (step S117) in Fig. 2B) and automatically starts uploading the scan data corresponding to the assigned filename (step S 118).

The web server 2 receives the file uploaded by the browser operator 11 (step S22).

When a two-step user operation consisting of file selection and transmission selection known in the art is adopted for uploading a file, for example, using the file selection tag for file selection and using a form tag "submit" for transmission selection, a page transition occurs in a browser, and the file is uploaded when the page transition is completed. Thus, the completion of uploading the file may be detected by monitoring the page transition status of an ordinary browser.

In contrast to the above two-step operation, in the case of a single-step operation in which a file is uploaded using a scripting language that runs on the browser, for example, when a scripting language such as JavaScript is used to complete uploading through a single-step operation of file selection, no page transition occurs in the browser, and thus the upload status cannot be detected based on the page transition status. For example, since Fig. 3B and Fig. 3G have the same universal resource locator (URL), the upload status cannot be detected based on the page transition status.

Thus, in the present exemplary embodiment, the communication monitor 121 is provided in the browser controller 12, and a process is added in which the browser controller 12 monitors the communication between the browser and the web server 2 (step S125) after assigning the filename to the file selection tag. Uploading is determined to be in progress after the communication starts, and the uploading is determined to be completed when the communication stops. If the completion of the uploading is detected, a log of the scan-upload job may be recorded as described below, and the display of the operation panel may be controlled.

The browser controller 12 monitors the state of the communication during the uploading to detect the completion of the uploading as described above. For example, after a file is assigned to an HTML tag, the communication between the browser operator 11 and the currently displayed web server by an HTTP POST method is monitored.

To detect the completion of the uploading, the communication monitor 121 needs to start monitoring at least before the uploading is completed. Since the time that the uploading is completed is indefinite, monitoring basically begins around the start of the uploading. That is, although the filename is assigned first in Fig. 2B, communication monitoring may start first.

As described above, in response to the communication monitor 121 detecting the completion of uploading the scan data, the browser controller 12 notifies the job controller 13 of the completion of the uploading (step S126).

Upon receiving the notification of the completion of the uploading, the job controller 13 notifies the job status manager 15 of the completion of the uploading (step S136). Upon receiving the notification of the completion of the uploading, the job status manager 15 changes the status of the scan-upload job from "upload in progress" to "upload completed" (step S155). Since the scan-upload job is completed with the uploading being completed, the status of the scan-upload job is changed from "upload completed" to "scan-upload job completed" and the content recorded in the log is saved (step S156).

As illustrated in Fig. 3G, a display region 40a on the right-hand side of the service screen 40 displays a list of files stored in a folder ("For Work" in Fig. 3G) prepared and selected for the user (User A) on the web server 2. As in the example illustrated in Fig. 3G, a file 48, which is newly saved as a result of the uploading at this time, is added to the list of files.

The browser operator 11 may separately display a message 49 in the display region 40a indicating that the file has been added, as illustrated in Fig. 3G. The message 49 is written, for example, as part of the web page and is displayed by the JavaScript code configured to implement the upload function.

As described above, according to the present exemplary embodiment, even if the user selects the file selection tag, the filename is assigned to the file selection tag in response to the detection of the completion of the file generation for the scan data to be uploaded. Uploading a non-existent or incomplete file may be prevented in this way even if uploading is automatically started by the single-step operation described above.

As described above, if a web page is described only in HTML, in response to the completion of uploading, the screen displayed by the operation panel transitions to a screen that notifies the user of the completion of the uploading. However, when uploading is executed based on a JavaScript code, JavaScript does not detect the completion of the uploading, and thus the screen displayed by the operation panel does not transition to another screen in response to the completion of the uploading. The operation panel is equipped with buttons, such as a home button, and these buttons are available for a user operation. Accordingly, even while the web browser displaying the web page, in other words, the web browser executing the uploading, is communicating with the operation panel, the web browser is forced to terminate in response to a user operation such as pressing the home button to switch between display screens. In other words, if the user operates a button while the web browser is executing uploading, the uploading terminates before completion.

Thus, the web browser is configured to keep operating while executing uploading in the following manner in the present exemplary embodiment.

First, while uploading is in progress, the browser controller 12 causes the operation panel to indicate that the uploading is in progress and controls input and output to and from the operation panel so as to accept no user operation on the operation panel. Alternatively, the user may be informed that scan data is being uploaded, for example, by a message displayed by the operation panel indicating that the uploading is in progress. Alternatively, the operation panel may be caused to display a message indicating that a user operation on the operation panel is not accepted because the uploading is in progress. In case the user operates the operation panel despite such messages, the operation panel may be configured not to accept such a user operation, keeping the web browser operating while executing the uploading.

In response to detecting a user operation on the operation panel, the browser controller 12 may allocate a dedicated window to the uploading to continue the execution and may keep the operation panel available for a user operation. Since a dedicated window is allocated to the web browser performing the uploading, the execution is allowed to continue in the background separately from the operation panel. In this way, the multifunction peripheral 10 is allowed to respond to a user operation on the operation panel, and even if a user operation is performed, the multifunction peripheral 10 may maintain a state of executing the uploading without being affected by the user operation. A message indicating that the uploading is in progress is optionally displayed.

In the above description, a dedicated window is allocated to the uploading in response to the detection of a user operation on the operation panel. The uploading may be executed in the background from the start by automatically allocating a dedicated window when the uploading starts. In this case, the browser controller 12 keeps the operation panel available for a user operation from the start of the uploading.

In the above description, the multifunction peripheral 10 has been described as an example of the information processing system. The information processing system is not limited to the multifunction peripheral 10 and may be built by linking a computer, such as a personal computer (PC), with the multifunction peripheral 10 equipped with a scanner, or by attaching a scanner to a device such as a PC.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) An information processing system configured to, in response to a filename being assigned to a predetermined tag on a web page, automatically start uploading a file having the filename, the information processing system comprising:
   a processor configured to:
   receive an instruction to generate a file after the predetermined tag is selected; and
   assign a filename of the file to the predetermined tag in response to detecting completion of file generation executed in accordance with the received instruction.
(((2))) The information processing system according to (((1))),
   wherein the processor is configured to provide an instruction to execute the file generation without assigning to the predetermined tag the filename of the file to be generated by the file generation and is configured to monitor the file generation.
(((3))) The information processing system according to (((1))) or (((2))),
   wherein the processor is configured to start uploading the file by assigning the filename of the file to the predetermined tag.
(((4))) The information processing system according to (((1))),
   wherein the processor is configured to:
   in response to detecting the completion of the file generation, make an inquiry about a filename of the file generated by the file generation; and
   assign the filename acquired as a result of the inquiry to the predetermined tag.
(((5))) The information processing system according to any one of (((1))) to (((3))),
   wherein the processor is configured to, when the filename to be assigned to the predetermined tag is acquired at a time of receiving the instruction, provide an instruction to execute the file generation without assigning the filename to the predetermined tag.
(((6))) The information processing system according to any one of (((1))) to (((5))),
   wherein the processor is configured to keep a web browser operating while executing the uploading.
(((7))) The information processing system according to (((6))),
   wherein the processor is configured to cause a user interface to indicate that the uploading is in progress and is configured to cause the user interface to accept no user operation during the uploading.
(((8))) The information processing system according to (((6))),
   wherein the processor is configured to, in response to a user operation on a user interface, allocate a dedicated window to the web browser and keep the web browser executing the uploading and is configured to keep the user interface available for a user operation during the uploading.
(((9))) The information processing system according to any one of (((1))) to (((8))),
   wherein the processor is configured to allocate a dedicated window to a web browser and cause the web browser to start the uploading and is configured to keep a user interface available for a user operation during the uploading.
(((10))) An information processing system configured to, in response to a filename being assigned to a predetermined tag on a web page, automatically start uploading a file having the filename, the information processing system comprising:
   a processor configured to:
   receive an instruction to generate a file after the predetermined tag is selected; and
   when a filename to be assigned to the predetermined tag is acquired at a time of receiving the instruction, provide an instruction to execute file generation without assigning the filename to the predetermined tag.
(((11))) The information processing system according to any one of (((1))) to (((10))),
   wherein the file generation comprises scanning.
(((12))) A program causing a computer to execute a process, the computer being configured to, in response to a filename being assigned to a predetermined tag on a web page, automatically start uploading a file having the filename, the process comprising:
   receiving an instruction to generate a file after the predetermined tag is selected; and
   assigning a filename of the file to the predetermined tag in response to detecting completion of file generation executed in accordance with the received instruction.
(((13))) A program causing a computer to execute a process, the computer being configured to, in response to a filename being assigned to a predetermined tag on a web page, automatically start uploading a file having the filename, the process comprising:
   receiving an instruction to generate a file after the predetermined tag is selected; and
   when a filename to be assigned to the predetermined tag is acquired at a time of receiving the instruction, providing an instruction to execute file generation without assigning the filename to the predetermined tag.

In the information processing system according to (((1))), the newly generated file may be uploaded when the file is newly generated and is assigned the filename in response to the predetermined tag being selected on the web page.

In the information processing system according to (((2))), the completion of the file generation may be detected.

In the information processing system according to (((3))), the file may automatically start to be uploaded in response to the completion of the file generation.

In the information processing system according to (((4))), the process may be controlled in such a manner that the filename to be assigned to the predetermined tag is acquired only after the file generation is completed.

In the information processing system according to (((5))), the process may be controlled in such a manner that the filename is assigned to the predetermined tag only after the file generation is completed.

In the information processing system according to (((6))), the uploading in progress may be terminated normally.

In the information processing system according to (((7))), it is possible to prevent the uploading in progress from being terminated by a user operation.

In the information processing system according to (((8))), it is possible to respond to a user operation while keeping the uploading in progress.

In the information processing system according to (((9))), the uploading may be executed without occupying the user interface.

In the information processing system according to (((10))), the process may be controlled in such a manner that the filename is assigned to the predetermined tag only after the file generation is completed.

In the information processing system according to (((11))), the file newly generated by scanning may be uploaded.

In the program according to (((12))), the newly generated file may be uploaded when the file is newly generated and is assigned the filename in response to the predetermined tag being selected on the web page.

In the program according to (((13))), the process may be controlled in such a manner that the filename is assigned to the predetermined tag only after the file generation is completed.

## Claims

1. An information processing system configured to, in response to a filename being assigned to a predetermined tag on a web page, automatically start uploading a file having the filename, the information processing system comprising:
a processor configured to:
receive an instruction to generate a file after the predetermined tag is selected; and
assign a filename of the file to the predetermined tag in response to detecting completion of file generation executed in accordance with the received instruction.

2. The information processing system according to claim 1,
wherein the processor is configured to provide an instruction to execute the file generation without assigning to the predetermined tag the filename of the file to be generated by the file generation and is configured to monitor the file generation.

3. The information processing system according to claim 1 or 2,
wherein the processor is configured to start uploading the file by assigning the filename of the file to the predetermined tag.

4. The information processing system according to claim 1,
wherein the processor is configured to:
in response to detecting the completion of the file generation, make an inquiry about a filename of the file generated by the file generation; and
assign the filename acquired as a result of the inquiry to the predetermined tag.

5. The information processing system according to any one of claims 1 to 3,
wherein the processor is configured to, when the filename to be assigned to the predetermined tag is acquired at a time of receiving the instruction, provide an instruction to execute the file generation without assigning the filename to the predetermined tag.

6. The information processing system according to any one of claims 1 to 5,
wherein the processor is configured to keep a web browser operating while executing the uploading.

7. The information processing system according to claim 6,
wherein the processor is configured to cause a user interface to indicate that the uploading is in progress and is configured to cause the user interface to accept no user operation during the uploading.

8. The information processing system according to claim 6,
wherein the processor is configured to, in response to a user operation on a user interface, allocate a dedicated window to the web browser and keep the web browser executing the uploading and is configured to keep the user interface available for a user operation during the uploading.

9. The information processing system according to any one of claims 1 to 8,
wherein the processor is configured to allocate a dedicated window to a web browser and cause the web browser to start the uploading and is configured to keep a user interface available for a user operation during the uploading.

10. An information processing system configured to, in response to a filename being assigned to a predetermined tag on a web page, automatically start uploading a file having the filename, the information processing system comprising:
a processor configured to:
receive an instruction to generate a file after the predetermined tag is selected; and
when a filename to be assigned to the predetermined tag is acquired at a time of receiving the instruction, provide an instruction to execute file generation without assigning the filename to the predetermined tag.

11. The information processing system according to any one of claims 1 to 10,
wherein the file generation comprises scanning.

12. A program causing a computer to execute a process, the computer being configured to, in response to a filename being assigned to a predetermined tag on a web page, automatically start uploading a file having the filename, the process comprising:
receiving an instruction to generate a file after the predetermined tag is selected; and
assigning a filename of the file to the predetermined tag in response to detecting completion of file generation executed in accordance with the received instruction.

13. A program causing a computer to execute a process, the computer being configured to, in response to a filename being assigned to a predetermined tag on a web page, automatically start uploading a file having the filename, the process comprising:
receiving an instruction to generate a file after the predetermined tag is selected; and
when a filename to be assigned to the predetermined tag is acquired at a time of receiving the instruction, providing an instruction to execute file generation without assigning the filename to the predetermined tag.

14. An information processing method in which, in response to a filename being assigned to a predetermined tag on a web page, a file having the filename automatically starts to be uploaded, the method comprising:
receiving an instruction to generate a file after the predetermined tag is selected; and
assigning a filename of the file to the predetermined tag in response to detecting completion of file generation executed in accordance with the received instruction.

15. An information processing method in which, in response to a filename being assigned to a predetermined tag on a web page, a file having the filename automatically starts to be uploaded, the method comprising:
receiving an instruction to generate a file after the predetermined tag is selected; and
when a filename to be assigned to the predetermined tag is acquired at a time of receiving the instruction, providing an instruction to execute file generation without assigning the filename to the predetermined tag.
